# EUROPÄISCHE PATENTSCHRIFT

(11) **EP 1 284 926 B1**
(45) Veröffentlichungstag und Bekanntmachung des Hinweises auf die Patenterteilung: **18.07.2012**
(21) Anmeldenummer: 01929589.8
(22) Anmeldetag: 20.04.2001
(51) Int. Cl.: C01B 17/79, B01J 23/847, B01J 23/843, B01J 35/00

(54) **VERFAHREN ZUM KATALYTISCHEN UMSETZEN VON GASEN MIT HOHEM GEHALT AN SCHWEFELDIOXID**
METHOD FOR THE CATALYTIC CONVERSION OF GASES WITH A HIGH SULFUR DIOXIDE CONTENT
PROCEDE DE CONVERSION CATALYTIQUE DE GAZ A HAUTE TENEUR EN DIOXYDE DE SOUFRE

(30) Priorität: 11.05.2000 DE 10023178
(43) Veröffentlichungstag der Anmeldung: 26.02.2003
(73) Patentinhaber: Outokumpu Oyj, 02200 Espoo (FI)
(72) Erfinder: ANASTASIJEVIC, Nikola, 63674 Altenstadt (DE); WERNER, Dietrich, 64409 Messel (DE); RUNKEL, Marcus, 55288 Partenheim (DE); LAIBACH, Stefan, 60389 Frankfurt am Main (DE); WINKLER, Egon, 65439 Flörsheim (DE); HOLLNAGEL, Achim, 60599 Frankfurt am Main (DE)
(74) Vertreter: KEIL & SCHAAFHAUSEN Patentanwälte
(86) Internationale Anmeldenummer: PCT/EP2001/004503
(87) Internationale Veröffentlichungsnummer: WO 2001/085611

(56) Entgegenhaltungen:
- DE-A- 19 800 800
- DE-B- 2 213 580

## Beschreibung

Die Erfindung betrifft ein Verfahren zum katalytischen Umsetzen eines Gasgemisches nach dem Oberbegriff des Anspruchs 1.

Ein hoher SO₂-Gehalt im umzusetzenden Gasgemisch führt am Katalysator zu hohen Temperatursteigungen, da die SO₂-Oxidation eine stark exotherme Reaktion ist. Die konventionellen Katalysatoren auf Vanadiumbasis sind bei den resultierenden hohen Temperaturen thermisch instabil, so dass man üblicherweise SO₂-Konzentrationen von nur etwa 10 bis 12 Vol. % zulässt.

Ein Verfahren mit den Merkmalen des Oberbegriffs des Anspruchs 1 ist aus der DE 198 00 800 A1 bekannt. Dieses Verfahren arbeitet mit einem speziellen, thermisch stabilen Eisenkatalysator, dem eine vanadiumhaltige Zündschicht vorgeschaltet ist.

Um auch Gase mit höherem SO₂-Gehalt verarbeiten zu können, wird in der DE-Auslegeschrift 2213580 vorgeschlagen, die Umsetzung zunächst teilweise an einem V205-Katalysator durchzuführen und das Gas dann ohne Zwischenkühlung durch ein Bett eines Eisenoxid-Katalysators zu leiten. Nach Kühlung soll das Gas dann durch mindestens ein weiteres Katalysatorbett geführt werden. Dieses Verfahren ist relativ aufwendig.

Der Erfindung liegt die Aufgabe zugrunde, die bekannten Verfahren weiter zu entwickeln, und ein kostengünstiges Verfahren bereitzustellen, das in der Praxis robust arbeitet. Insbesondere sollen sich die Katalysatoren thermisch stabil verhalten und auch gegen Verunreinigungen im Gas unempfindlich sein.

Erfindungsgemäß wird die Aufgabe durch ein Verfahren mit den Merkmalen des Anspruchs 1 gelöst.

Beim erfindungsgemäßen Verfahren arbeitet man in der ersten Katalysatorschicht mit einem in der Aktivität abgeschwächten, z.B. verdünnten Katalysator, womit der Temperaturanstieg begrenzt wird. Das hierfür wichtige katalytisch inaktive Inertmaterial kann im Katalysatorbett als inerte Füllkörper (z.B. auf SiO₂- Basis) vorliegen, oder es kann bereits in die Katalysatorkörner integriert sein. Das diese erste Katalysatorschicht verlassende Gas tritt direkt und ohne Zwischenkühlung mit einer Temperatur von 500 bis 750 °C und vorzugsweise 550 bis 680 °C in die zweite Katalysatorschicht ein.

Der Katalysator der zweiten Katalysatorschicht hat einen Träger auf Basis SiO₂, das sich inert verhält, und er enthält, bezogen auf die Gesamtmasse des Katalysators, als aktive Komponenten 3 bis 30 Gew.- % Eisenoxid und 3 bis 30 Gew.- % Arsenoxid (As203). Dabei ist es für die Konstanz der Aktivität vorteilhaft, wenn mindestens 20 Gew.- % und vorzugsweise mindestens 40 Gew.- % des Arsenoxids als Eisenarsenat (FeAsO₄ gebunden sind.

Es wurde gefunden, dass Arsen eine wichtige Aktivkomponente ist, welche die Aktivmasse des eisenhaltigen Katalysators stabilisiert und auch das nachteilige Kristallwachstum von Fe203 ganz oder weitgehend verhindert. Für einen im Dauerbetrieb konstant hohen Umsatz des SO₂ zu SO₃ bei ausreichend vorhandenem O₂ ist es nämlich vorteilhaft, wenn ein gewisser Anteil des Eisens im Katalysator der zweiten Katalysatorschicht in einer amorphen Struktur gebunden ist, z.B. mindestens 10% des Eisens. Diese amorphe Struktur besteht aus verschiedenen Eisenoxid- und - Sulfatphasen

Der erfindungsgemäß zu verwendende eisenhaltige Katalysator enthält Arsen und er ist dadurch unempfindlich auch gegen einen hohen Arsengehalt im zu verarbeitenden Gas. Dies ist für die Praxis wichtig, denn auf übliche andere Katalysatoren wirkt Arsen als Katalysatorgift und verschlechtert auf Dauer deren Aktivität.

### Beispiel:

Im Labor wurden zunächst Varianten A und B eines eisenhaltigen Katalysators hergestellt:
   Als Ausgangsmaterial dient ein kommerzielles SiO₂-Katalysator- Trägermaterial (Hersteller: BASF) in Röhrchenform mit 10 mm Aussendurchmesser und Längen im Bereich von 10 bis 20 mm. Es besitzt eine gute thermische Stabilität bis 1000 °C und eine BET- Oberfläche von etwa 1000 m²/g. Der Druckabfall der Trägermaterial- Schüttung beträgt 2 bis 3 mbar pro m Schütthöhe. Die Zusammensetzung der Katalysatoren ergibt sich aus der nachfolgenden Tabelle 2.

### Katalysator A (ohne Arsen):

30 g des SiO₂- Trägers werden zu einer Lösung von 5,08 g Fe2 (SO₄)₃ in 100 mm Wasser gegeben. Nach einer 10 minütigen Einwirkzeit mit gelegentlichem Schütteln des Behälters wird das Trägermaterial aus der Lösung genommen und in einem Trockenschrank bei 105 °C 3 Stunden lang getrocknet. Dieser Tränkvorgang wird 3 Mal wiederholt.

### Katalysator B (mit Arsen):

Zunächst wird eine Lösung aus 6 g Fe2(SO₄)₃ in 200 ml Wasser hergestellt. Durch Zugabe von 4 g As₂O₅ wird Eisenarsenat ausgefällt. 50 g des SiO₂ -Trägers werden anschließend in der Suspension unter gelegentlichem Schütteln des Behälters 10 Min. lang getränkt. Das Trägermaterial wird dann in einem Trockenschrank bei 105 °C 3 Stunden lang getrocknet, der Tränkvorgang wird 5 Mal wiederholt, bis die gesamte Suspension aufgebraucht ist.

### Beispiel 1:

Im Labor wurden der Katalysator A und B getestet:
Als Versuchsreaktor diente ein Quarzglasreaktor. Mit einer Schüttdichte von 0,35 g/m³ wurde der Reaktor bis zu einer Schütthöhe vom 2-fachen Innendurchmesser d des Quarzglasreaktors gefüllt. Ein Thermoelement befand sich in der Mitte der Katalysatorschüttung mit einem Abstand zum Gaseintritt von 0,15 d. Die Gasversorgung von SO₂, O₂ und N₂ erfolgte über 3 Massendurchflussregler- Nach einer Gasmischkammer wurde das Gas am Außenmantel des Reaktors aufgeheizt und durchströmte von unten die Katalysatorschüttung. Am Reaktoraustritt wurde das Gas bei Raumtemperatur über 3 Schwefelsäure- Waschflaschen zur SO₃-Absorption und danach durch Gasanalysatoren für O₂ und SO₂ geführt.

Für alle Versuche war die Verweilzeit konstant. Dies ergab einen Volumenstrom von 68 1/h. Die Zusammensetzung des Eintrittsgases betrug 20 Vol. % SO₂, 16 Vol. -% O₂ und 64 Vol. % N₂. Zu Beginn des Versuchs wurde ein Temperaturprofil von 500 bis 750 °C aufgenommen. Während einer Versuchsdauer von 5 Tagen wurde der Verlauf des SO₂ - Umsatzes bei 750 °C bestimmt. Anschließend wurde der Katalysator auf seine chemische Zusammensetzung (Röntgenfluoreszenzanalyse) und seine Phasenbestandteile (Röntgendiffraktometeranalyse) untersucht, zu den Ergebnissen vergleiche Tabelle 1.

**Tabelle 1:**

| Katalysator | K | Temperatur |
|---|---|---|
| A | 90 % | 750 °C |
| B | 6,5 % | 750 °C |
| B1 | 1,0 % | 600 bis 700 °C |
| | | |

| | | |
|---|---|---|
| K = Kristallinitätsgrad von Fe203, B1 = der im nachfolgenden Beispiel 2 verwendete Katalysator. | | |

### Beispiel 2:

In einer Pilotanlage bildete ein kommerzieller Vanadiumkatalysator V1 zusammen mit 50 Gew. -% inerten Füllkorpern (SiO₂- Röhrchen) die erste Katalysatorschicht, die zweite Katalysatorschicht bestand aus dem Katalysator B, der im Laufe des Betriebs durch Arsen- Aufnahme zum Katalysator B1 verändert wurde.

Die Versuche wurden in einer modularen Pilotanlage durchgeführt, die zu diesem Zweck in einem Hüttenbetrieb aufgestellt wurde, um unter realen Bedingungen zu testen. Ein Teilstrom des entstaubten Rohgases wurde in einem Strahlwäscher gekühlt und anschließend getrocknet, ehe es vorgewärmt auf 350 °C dem Reaktor zugeführt wurde. Der Gasdurchsatz betrug 200 Nm³/h, das Gas setzte sich aus 20 Vol.- % SO₂, 16 Vol.- % O₂ und
64 Vol. - % N₂ zusammen.

Durch die Verdünnung des Vanadiumkatalysators mit Füllkörpern konnte die Aktivität der Zündschicht ausreichend gesenkt werden, um die Austrittstemperatur des Gases aus der ersten Katalysatorschicht auf 610 °C zu halten. In der zweiten Katalysatorschicht war der eingesetzte Eisenoxid- Katalysator im Temperaturbereich 600 bis 750 °C aktiv. Während des Betriebs sammelte sich Arsen aus dem Abgas in dem Katalysator an und bildete Eisenarsenat.

Die Hauptkomponenten der verschiedenen Katalysatoren ergeben sich aus nachfolgender Tabelle 2 (in Gew. -%):

**Tabelle 2:**

| Katalysator | SiO₂ | V2O5 | Fe2O3 | As2O3 | Al2O3 |
|---|---|---|---|---|---|
| A | 92,0 | -- | 4,1 | -- | -- |
| B | 90,8 | -- | 3,05 | 5,4 | 0,42 |
| B1 | 68,4 | 0,45 | 13, 6 | 3, 87 | 0, 38 |
| V1 | 56,1 | 4, 6 | 1,21 | 0, 66 | 1,42 |

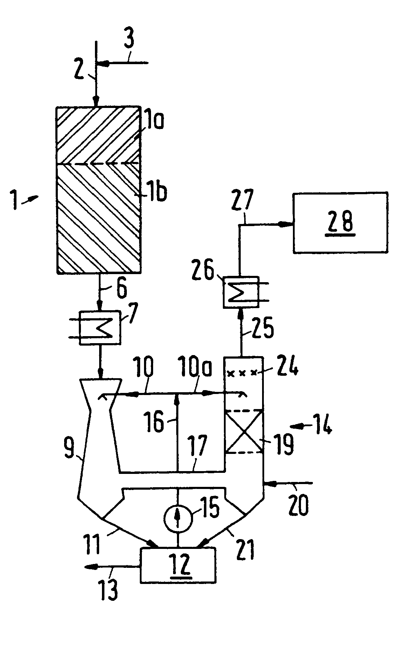

Die Zeichnung zeigt ein Fließschema des Verfahrens in der Anwendung zusammen mit einer konventionellen Schwefelsäure-Anlage.

Einer Vorstufe (1) führt man durch die Leitung (2) SO₂-reiches Gas zu, dem man durch die Leitung (3) O₂- haltiges Gas (z.B. mit O₂ angereicherte Luft) zugemischt hat. Der SO₂- Gehalt im Gas der Leitung (2) liegt im Bereich von 15 bis 60 Vol. -% und beträgt zumeist mindestens 18 Vol.- %, das Gas ist vorzugsweise auf Temperaturen von 350 bis 600 °C vorgewärmt. Die Vorstufe (1) besteht aus der ersten Katalysatorschicht (1a) und der zweiten Katalysatorschicht (1b).

Am Eintritt in die Schicht (1a) sorgt man für ein O2 : SO₂ Volumenverhältnis von mindestens 1 : 2. Ein erstes SO3-haltiges Produktgemisch verlässt die Schicht (1b) in der Leitung (6) mit Temperaturen im Bereich von 600 bis 800 °C und vorzugsweise
620 bis 750 °C. Dieses erste Gemisch wird im Abhitzekessel (7) auf Temperaturen von 50 bis 300 °C gekühlt, dabei kann aus Kühlwasser wertvoller Hochdruckdampf gewonnen werden. Das Gasgemisch tritt dann in einen ersten Absorber (9) ein, der z.B. ähnlich einem Venturiwäscher ausgebildet ist. Schwefelsäure, die aus der Leitung (10) kommt, wird in das Gas eingesprüht, wobei die Konzentration der Schwefelsäure durch Aufnahme von SO₃ erhöht wird. Die im ersten Absorber (9) gebildete Schwefelsäure fließ durch die Leitung (11) zu einem Sammeltank (12), die überschüssige Schwefelsäure, deren Konzentration üblicherweise im Bereich von 95 bis 100 Gew. - % liegt, wird in der Leitung (13) abgezogen.

Aus dem Sammeltank (12) führt man durch die Kreislaufpumpe (15) und die Leitung (16) Schwefelsäure zum ersten Absorber (9) und auch zu einem zweiten Absorber (14), der durch den Kanal (17) mit dem ersten Absorber verbunden ist. SO3-haltiges Gas strömt durch den Kanal (17) zum zweiten Absorber (14) und dort aufwärts durch eine Schicht (19) aus Kontaktelementen, die mit Schwefelsäure aus der Leitung (10a) besprüht wird. Wasser wird in der Leitung (20) herangeführt, und die in der Leitung (21) ablaufende Schwefelsäure gelangt ebenfalls in den Sammeltank (12). Die Absorber (9) und (14) können in der Praxis auch anders als in der Zeichnung dargestellt ausgebildet sein.

Das im zweiten Absorber (14) aufwärts strömende Gas gibt Schwefelsäuretröpfchen im Tropfenabscheider (24) ab und gelangt dann durch die Leitung (25) zu einen Erhitzer (26), der die Temperatur des Gases auf 380 bis 500 °C anhebt. Das Gas der Leitung (27), das hier auch als zweites Produktgemisch bezeichnet wird, weist üblicherweise eine SO₂-Konzentration von 3 bis 14 Vol. -% auf. Wegen dieser relativ geringen SO₂- Konzentration kann es einer konventionellen Schwefelsäure- Anlage (28) aufgegeben werden, die mit üblichen Katalysatoren zur Oxidation von SO₂ zu SO₃ arbeitet. Die Arbeitsweise und der Aufbau einer solchen konventionellen Anlage ist bekannt und zum Beispiel in Ullmann's Encyclopedia of industrial Chemistry, 5. Auflage, Band A25, Seite 644 bis 664 beschrieben.

## Patentansprüche

1. Verfahren zur katalytischen Umsetzung eines Gasgemisches, welches molekularen Sauerstoff und 15 bis 60 Vol.-% SO₂ enthält, bei Temperaturen im Bereich von 350 bis 800°C beim Hindurchströmen durch eine erste Katalysatorschicht, welche einen Vanadiumpentoxid enthaltenden Katalysator enthält, und unmittelbar anschließend durch eine zweite Katalysatorschicht, welche einen Eisen enthaltenden Katalysator enthält, zum Erzeugen eines SO₃-haltigen Produktgases mit einem Volumenverhältnis SO₂ : SO₃ von höchstens 0,1, wobei man das Gasgemisch mit einer Eintrittstemperatur von 350 bis 600°C in die erste Katalysatorschicht leitet, wobei die erste Katalysatorschicht körnigen V205-Katalysator und 20 bis 80 Gew.-% katalytisch inaktives Inertmaterial enthält und wobei man das Gasgemisch mit einer Temperatur von 500 bis 750°C in die zweite Katalysatorschicht leitet,**dadurch gekennzeichnet, dass** der Katalysator der zweiten Katalysatorschicht mit SiO₂-Träger aufgebaut ist und 3 bis 30 Gew.-% Eisenoxid und 3 bis 30 Gew.-% Arsenoxid, bezogen auf die Gesamtmasse des Katalysators, enthält.

2. Verfahren nach Anspruch 1, **dadurch gekennzeichnet, dass** das Eisen im Katalysator der zweiten Katalysatorschicht zu mindestens 10 Gew.-% in einer amorphen Struktur gebunden ist.

3. Verfahren nach Anspruch 1 oder 2, **dadurch gekennzeichnet, dass** das aus der zweiten Katalysatorschicht abgezogene SO₃-haltige Produktgas zum Entfernen von SO₃ mit Schwefelsäure in Kontakt gebracht wird, wobei ein Gasgemisch mit einem SO₃-Gehalt von 3 bis 30 Vol.-% erzeugt wird, aus welchem man Schwefelsäure erzeugt.

## Claims

1. A process for the catalytic conversion of a gas mixture which contains molecular oxygen and 15 to 60 vol-% SO₂ at temperatures in the range from 350 to 800°C when flowing through a first catalyst layer which contains a catalyst containing vanadium pentoxide, and directly subsequently through a second catalyst layer which contains a catalyst containing iron, for producing an SO₃-containing product gas with a volume ratio of SO₂ : SO₃ of not more than 0.1, wherein the gas mixture is introduced into the first catalyst layer with an inlet temperature of 350 to 600°C, wherein the first catalyst layer contains granular V₂O₅ catalyst and 20 to 80 wt-% catalytically inactive inert material, and wherein the gas mixture is introduced into the second catalyst layer with a temperature of 500 to 750°C, **characterized in that** the catalyst of the second catalyst layer comprises an SiO₂ carrier and contains 3 to 30 wt-% iron oxide and 3 to 30 wt-% arsenic oxide, based on the total mass of the catalyst.

2. The process as claimed in claim 2, **characterized in that** the iron in the catalyst of the second catalyst layer is bound in an amorphous structure for at least 10 wt-%.

3. The process as claimed in claim 1 or 2, **characterized in that** the SO₃-containing product gas withdrawn from the second catalyst layer is brought in contact with sulfuric acid for removing SO₃, wherein a gas mixture with an SO₃ content of 3 to 30 vol-% is produced, from which sulfuric acid is produced.

## Revendications

1. Procédé destiné à faire réagir un mélange gazeux contenant de l'oxygène moléculaire et 15 à 60 % en volume de SO₂, à des températures comprises entre 350 et 800 °C en le faisant passer à travers une première couche catalytique contenant un catalyseur contenant du pentoxyde de vanadium puis immédiatement à travers une deuxième couche catalytique contenant un catalyseur contenant du fer, pour ainsi obtenir un produit gazeux contenant du SO₃ doté d'un rapport volumique SO₂ : SO₃ inférieur ou égal à 0,1, ledit mélange gazeux étant introduit dans la première couche catalytique à une température d'entrée comprise entre 350 et 600 °C, ladite première couche catalytique contenant du catalyseur V₂O₅ sous forme de granulés et 20 à 80 % en poids d'un matériau inerte sans activité catalytique, et ledit mélange gazeux étant introduit dans la deuxième couche catalytique à une température d'entrée comprise entre 500 et 750 °C, **caractérisé en ce que** la structure du catalyseur de la deuxième couche catalytique comporte un support en SiO₂ et contient 3 à 30 % en poids d'oxyde de fer et 3 à 30 % en poids d'oxyde d'arsenic, par rapport à la masse totale dudit catalyseur.

2. Procédé selon la revendication 1, **caractérisé en ce que** le fer dans le catalyseur de la deuxième couche catalytique est lié dans une structure amorphe à au moins 10 % en poids.

3. Procédé selon la revendication 1 ou 2, **caractérisé en ce qu'**à l'issue de la deuxième couche catalytique, ledit produit gazeux contant du SO₃ est mis en contact avec de l'acide sulfurique pour enlever du SO₃ et ainsi obtenir un mélange gazeux ayant une teneur en SO₃ comprise entre 3 et 30 % en volume et étant utilisé pour produire de l'acide sulfurique.
